# EUROPÄISCHE PATENTSCHRIFT

(11) **EP 3 027 948 B1**
(45) Veröffentlichungstag und Bekanntmachung des Hinweises auf die Patenterteilung: **04.10.2017**
(21) Anmeldenummer: 14748131.1
(22) Anmeldetag: 30.06.2014
(51) Int. Cl.: F16L 15/04, F16L 15/08, B65G 39/12, F16L 13/14, F16L 13/16

(54) **PRESSFITTING FÜR GEWINDEANSCHLUSS UND VERFAHREN ZUM ANBINDEN EINES FITTINGS AN EINEM GEWINDEANSCHLUSS**
PRESS FITTING FOR A THREADED CONNECTION AND METHOD FOR ATTACHING A FITTING TO A THREADED CONNECTION
PIÈCE DE RACCORDEMENT À SERTIR POUR CONNEXION FILETÉE ET PROCÉDÉ POUR FIXER UNE PIÈCE DE RACCORDEMENT À UNE CONNEXION FILETÉE

(30) Priorität: 31.07.2013 DE 102013108201
(43) Veröffentlichungstag der Anmeldung: 08.06.2016
(73) Patentinhaber: Viega Technology GmbH & Co. KG, 57439 Attendorn (DE)
(72) Erfinder: HARTMANN, Anton, 57439 Attendorn (DE); HENSCHEL, Burkhard, 57368 Lennestadt (DE); WIETHOFF, Benedikt, 59889 Niedersalwey (DE); KOCH, Tobias, 35745 Herborn (DE); HALBE, Ralf, 57482 Wenden-Hillmicke (DE); ARNING, Ulrich, 57439 Attendorn (DE); MÜLLER, Andreas, 57258 Freudenberg (DE); BECKER, Christian, 58840 Plettenberg (DE); KASPERKOWIAK, Frank, 57439 Attendorn (DE); MESTER, Reiner, 57368 Lennestadt (DE); MASSOW, Peter, 57271 Hilchenbach (DE)
(74) Vertreter: Cohausz & Florack
(86) Internationale Anmeldenummer: PCT/EP2014/063837
(87) Internationale Veröffentlichungsnummer: WO 2015/014557

(56) Entgegenhaltungen:
- EP-A1- 1 626 217
- WO-A1-82/03901
- WO-A1-2006/115417
- BE-A2- 884 150
- DE-A1-102004 031 247
- US-A- 2 926 029
- US-A1- 2004 090 068
- US-A1- 2006 208 488

## Beschreibung

Die Erfindung betrifft eine Verwendung eines Fittings für eine Anbindung an einem Gewindeanschluss einer Leitung, insbesondere einer Wasserleitung, oder an einer Armatur zur Verpressung mit einem Presswerkzeug, der Fitting umfassend einen Grundkörper, einen Gewindeabschnitt und einen am Gewindeabschnitt angeordneten Dichtkörper, wobei der Grundkörper an der dem Gewindeabschnitt gegenüberliegenden Seite eine Pressfläche aufweist, wobei der Dichtkörper eine zylindrische Grundform aufweist und sich axial mindestens entlang einer Windung, vorzugsweise mindestens entlang von zwei Windungen des abzudichtenden Gewindes des Gewindeanschlusses erstreckt und wobei der Dichtkörper zumindest teilweise mit einem Gewinde versehen ist. Die Erfindung betrifft auch ein Verfahren zum Anbinden eines Fittings an einem Gewindeanschluss einer Leitung.

Bei der Neuinstallation oder der Instandsetzung von bestehenden Leitungen, insbesondere in der Hausinstallation von Trinkwasser- bzw. Heizungsleitungen, müssen regelmäßig Gewindeübergänge hergestellt werden. Üblicher Weise werden dabei kegelige Gewinde verwendet. Der Nenndurchmesser des konischen Gewindes entspricht nach einigen Umdrehungen dem des zylindrischen Gegengewindes. Bei weiterem Anziehen verklemmen sich die Gewinde ineinander und wirken so metallisch dichtend. Trotzdem werden solche Whitworth-Rohrgewinde oder "R-Gewinde" vor dem Verschrauben zusätzlich mit Dichtmitteln wie Teflon oder Hanf versehen, um die verbleibenden Spalte zu füllen, um eine sichere und dauerhafte Abdichtung zu gewährleisten.

Diese Art der Installation ist zeitintensiv und durch die Verwendung von separatem Dichtmittel oder Dichtpaste hygienisch nicht immer einwandfrei. Außerdem werden die Dichtmittel regelmäßig per Hand ein- bzw. aufgebracht, wodurch Unregelmäßigkeiten in der Dichtung entstehen können. Des Weiteren werden bei der Herstellung der Verbindung mittels Werkzeugen, beispielsweise Schraubenschlüssel oder Rohrzange, teilweise hohe Drehmomente in die Verbindung eingeleitet. Somit können bei Herstellung der Schraubverbindung zwischen verschiedenen Komponenten und dem Rohrleitungssystem Beschädigungen an den Gewinden bzw. den Komponenten auftreten. Zudem sind Gewindeverbindungen nach deren Installation zeitaufwändig durch den Handwerker auf Dichtheit zu prüfen. Derartige Komponenten können beispielsweise Zu- und Abläufe von Warmwasserspeichern, Heizungskesseln, Armaturen, Filtern oder Ventilen sein.

Grundsätzlich können die beschriebenen Fittings für Leitungen mit flüssigen oder gasförmigen Fluiden eingesetzt werden. Wenn im Folgenden die Erfindung anhand von Wasserleitungen beschrieben wird, ist dieses nicht beschränkend zu verstehen.

In der US 2,380,690 A wird eine Rohrkupplung offenbart. Ein Dichtelement aus einem weicheren Metall ist vorgesehen und weist ein Gewinde auf.

Die US 2006/0208488 A1 betrifft eine Rohrkupplung für Öl- und Gasleitungen, wobei ein Rohr über eine Gewindeverbindung in ein weiteres Rohr geschraubt und einem radialen Aufweiten unterworfen wird.

In der BE 884150 A wird ein Verbindungstück mit einer Hülse offenbart, wobei der endseitige Abschnitt der Hülse mit einer gewindeförmigen Rippe und mit einem Dichtelement ausgestaltet sein kann.

Die EP 1 626 217 A1 offenbart eine Verbindung eines Fittings über ein Gewinde mit einem Anschlussstück. Der Fitting wird mit einem Presswerkzeug von innen punktuell verpresst.

In der US 2004/0090068 A1 wird eine Rohrkupplung für eine Verbindung von Rohren über ein radiales Aufweiten offenbart. Die Rohre können dabei über Gewindeverbindungen mit der Rohrkupplung verschraubt werden.

Die US 2,926,029 A beschreibt einen Fitting für eine Schlauchverbindung.

Die WO 82/03901 A1 betrifft einen Fitting mit einem Gewindeabschnitt und Dichtelementen. Die Verbindung des Fittings mit einem Rohr wird über ein radial einwärts gerichtetes Verpressen gesichert.

Die DE 10 2004 031 247 A1 beschreibt eine Armatur mit einem Anschlussteil, in welches ein Rohr eingesteckt werden kann und welches Profilierungen aufweist.

In der WO 2006/115417 A1 wird eine Fixerhülse angegeben, welche ein mit einem Außengewinde versehenes Rohr fixieren kann.

Die US 2,631,871 A beschreibt ein Dichtelement für Gewindeverbindungen. Ein Dichtkörper aus einem elastischen Material erstreckt sich hierbei entlang eines Abschnitts eines Gewindes.

Der vorliegenden Erfindung liegt das technische Problem zugrunde, das Anbinden eines Fittings an einem Gewindeanschluss einer Leitung oder einer Armatur zu vereinfachen und gleichzeitig zuverlässiger auszugestalten.

Das zuvor aufgezeigte technische Problem wird durch eine Verwendung der eingangs genannten Art dadurch gelöst, dass der Grundkörper an der dem Gewindeabschnitt radial gegenüberliegenden Seite an der Pressfläche verpresst wird.

Mit dem erfindungsgemäßen Fitting kann der Grundkörper im aufgeschraubten Zustand mit einem bereits bekannten Presswerkzeug verpresst werden. Der Dichtkörper wird durch das Verpressen des Grundkörpers im Bereich der Pressfläche an das Gewinde des Gewindeanschlusses und den Gewindeabschnitt des Fittings angepresst, wodurch eine zuverlässige Abdichtung des Fittings gegenüber dem Gewindeanschluss erreicht wird. Das Fitting weist dann am dem Gewindeabschnitt gegenüberliegenden Ende beispielsweise eine an sich bekannte Pressfittingkontur auf, um daran eine weitere Leitung anschließen zu können.

Da die Abdichtung zwischen dem Fitting und dem Gewindeanschluss erst nach dem Verpressen erfolgt, kann das Gewinde des Gewindeabschnitts ohne besondere Krafteinleitung auf den Gewindeanschluss aufgeschraubt werden. Denn eine zuverlässige Abdichtung alleine durch das Aufschrauben ist nicht erforderlich. Das Verpressen des Fittings erfolgt dann hauptsächlich radial, wodurch die mit dem Gewindeanschluss verbundene Leitung nicht oder nur wenig belastet wird.

Durch die Erfindung können beschädigte oder undichte Gewindeverbindungen vermieden, zeitintensive Arbeitsschritte eingespart, Folgeschäden durch fehlerhafte Verarbeitung vermieden und hygienisch unbedenkliche Dichtmittel, beispielsweise in Trinkwasserinstallationen angewendet werden. Gleichzeitig werden eine hohe Verdrehsicherheit, eine hohe Auszugsicherheit und eine hohe Dichtigkeit erreicht. Somit werden die Vorteile einer Schraubverbindung mit den Vorteilen einer Pressverbindung kombiniert.

Die vorliegende Erfindung wird hauptsächlich für Whitworth-Rohrgewinde, sogenannte R-Gewinde, eingesetzt, ist aber nicht auf eine Anwendung bei konischen Gewinden beschränkt. Die Erfindung kann auch bei anderen Gewinden, beispielsweise zylindrischen Gewinden angewendet werden. Außerdem kann das beschriebene Fitting grundsätzlich für alle Gewindedurchmesser angewendet werden. Hauptsächliche Anwendung findet das Fitting jedoch bei den üblichen Gewindeanschlüssen im Hausinstallationsbereich, die im Bereich von 0,25 Zoll bis 1,5 Zoll liegen.

Durch den Einsatz von vorgefertigten Fittings für Gewindeanschlüsse einschließlich einer werksseitig montierten Dichtung werden kurze Montagezeiten bei hoher Qualität der erzeugten Verbindung erreicht. Zudem stellt es einen Vorteil dar, wenn die Schraubverbindung im ersten Montageschritt noch nicht verpresst und somit noch ausgerichtet werden kann. Somit kann die Rohrverbindung zunächst vorinstalliert und ausgerichtet werden, um danach erst verpresst und somit fixiert zu werden.

Der Grundkörper kann aus den bekannten Materialien Edelstahl, Stahl, Kupfer, Kupferlegierungen, anderen Metallen oder aus einem Kunststoff, wie beispielsweise Ethylen-Propylen-Dien-Monomer (EPDM), Hydrierter Acrylnitrilbutadien-Kautschuk (HNBR), Fluorkarbon-Kautschuk (FKM), Silicone, Polyurethan (PU) oder Chlor-Butyl hergestellt werden. Die Herstellung des Grundkörpers kann insbesondere durch Umformen erfolgen, so dass eine teure spanabhebende Bearbeitung vermieden werden kann. Der Dichtkörper kann aus einem Weichmetall, aus Kunststoff, insbesondere aus temperaturstabilen Kunststoffen wie Polytetrafluorethylen (PTFE), Polyethersulfone (PES), Polyarylsulfone (PPSU) oder auch nachträglich vernetzte Kunststoffe wie Polyethylen (PEX) oder aus vernetzten Elastomeren bestehen.

Bei einer bevorzugten Ausgestaltung der vorliegenden Erfindung weist der Gewindeabschnitt ein Gewinde zumindest teilweise bestehend aus dem Material des Grundkörpers auf. Somit bildet der Grundkörper des Fittings mit seinem Gewindeabschnitt selbst zumindest einen Teil des Gewindes, das auf einen Gewindeanschluss einer Leitung aufgeschraubt wird. Der Dichtkörper wird dann im Gewindeabschnitt so angeordnet, dass nach dem Aufschrauben des Grundkörpers zumindest das Gewinde des Gewindeabschnitts selbst als auch gegebenenfalls der Dichtkörper mit dem Gewinde des Gewindeanschlusses in Kontakt stehen. Ebenso kann der Dichtkörper nur im Bereich des Gewindes des Gewindeanschlusses angeordnet sein, ohne mit diesem in Berührung zu stehen. Durch das Verpressen des Gewindeabschnitts wird dann der Dichtkörper in die Gewindegänge des Gewindeanschlusses eingepresst und es kommt zur gewünschten dauerhaften Abdichtung zwischen dem Fitting und dem Gewindeanschluss.

Dazu ist es weiter bevorzugt, dass der Gewindeabschnitt eine umlaufende Nut zur Aufnahme des Dichtkörpers aufweist. Somit ist der Dichtkörper zu beiden Seiten von jeweils einem Teil des Gewindes des Gewindeabschnitts eingegrenzt. Der Dichtkörper hat somit eine definierte Position innerhalb des Gewindeabschnitts und gewinnt dadurch eine axiale Stabilität beim Aufschrauben des Fittings.

Grundsätzlich kann der Dichtkörper in verschiedener Weise ausgebildet sein. Bevorzugt ist, dass der Dichtkörper schnurförmig ausgebildet ist und sich umfangseitig mindestens entlang einer Windung, vorzugsweise mindestens entlang von zwei Windungen des abzudichtenden Gewindes des Gewindeanschlusses erstreckt. Der schnurförmige Dichtkörper nimmt dabei vorzugsweise selber die Form einer Windung an, so dass der Dichtkörper während des Aufschraubens des Fittings auf den Gewindeanschluss in eine feste Anlage an dessen Gewinde kommt.

Daneben kann der Dichtkörper eine zylindrische Grundform aufweisen und sich axial mindestens entlang einer Windung, vorzugsweise mindestens entlang von zwei Windungen des abzudichtenden Gewindes des Gewindeanschlusses erstrecken. Diese Ausgestaltung hat den Vorteil, dass der Dichtkörper eine größere axiale Stabilität aufweist. In dieser Form kann der Dichtkörper eine rein zylindrische Form aufweisen oder ebenfalls zumindest teilweise mit einem Gewinde versehen sein.

In einer alternativen Ausgestaltung des erfindungsgemäßen Fittings kann der Gewindeabschnitt eine Vertiefung zur Aufnahme des Dichtkörpers aufweisen, wobei der Dichtkörper das Gewinde bildet. Durch die Vertiefung wird der Dichtkörper am Grundkörper gehalten und axial stabilisiert. Da der Dichtkörper selbst und nicht das Material des Grundkörpers das Gewinde bildet, ist es bevorzugt, dass der Dichtkörper gegenüber einer Drehung relativ zum Grundkörper gesichert ist. Beim Aufschrauben des Fittings kommt dann das Gewinde des Dichtkörpers mit dem Gewinde des Gewindeanschlusses in Eingriff, um nach dem Verpressen des Gewindeabschnitts eine zuverlässige dichte Verbindung zu bilden.

Des Weiteren kann die Verbindung zwischen dem Gewinde des Gewindeabschnitts und dem Gewinde des Gewindeanschlusses im aufgeschraubten und unverpressten Zustand undicht sein. Dadurch wird bei der Montage des Leitungssystems bei Verwendung des zuvor beschriebenen Fittings sichergestellt, dass bei einer Belastungsprobe aus einem nicht verpressten Fitting das in der Leitung transportierte Wasser bzw. das zu transportierende Fluid austritt. Zur Sicherstellung der Undichtigkeit des unverpressten, aufgeschraubten Fittings kann beispielsweise im Gewinde des Gewindeabschnitts und/oder des Dichtkörpers eine axiale Nut bzw. eine axiale Ausweitung oder Einbuchtung vorgesehen sein, die erst nach dem Verpressen verschlossen wird. Dadurch sind unverpresste Gewindeverbindungen sicher undicht, wodurch der Aufwand zur Überprüfung der Dichtheit der Gewindeverbindung nach der Installation verringert wird.

Das erfindungsgemäße Fitting sowie dessen zuvor erläuterte vorteilhafte Ausgestaltungen können sowohl für ein Innengewinde als auch ein Außengewinde angewendet werden. Dabei steht die Ausgestaltung als Innengewinde im Vordergrund, da die meisten Gewindeanschlüsse in der Hausinstallation ein Außengewinde aufweisen. Gleichwohl ist die Erfindung nicht auf Fittings beschränkt, die ein Innengewinde aufweisen.

Diese Pressfläche des Grundkörpers kann zumindest teilweise umlaufend ausgebildet sein oder sich über den gesamten Umfang erstrecken Zudem ist die Pressfläche des Grundkörpers zumindest teilweise, vorzugsweise vollständig an die Presskontur eines zu verwendenden Presswerkzeugs angepasst. Die Wandstärke im Bereich des zu verpressenden Gewindeabschnitts ist dabei so eingestellt, dass das Verpressen zu dem notwendigen Verformen des Gewindeabschnitts und somit des Dichtkörpers führt. Somit kann ein bereits vorhandenes Presswerkzeug verwendet werden, das für das Herstellen von Pressverbindungen zwischen Fittings und Rohrleitungen vorgesehen ist.

In bevorzugter Weise kann die Pressfläche des Grundkörpers eine im Wesentlichen zylindrische Kontur aufweisen. Damit wird eine einfach herzustellende Außenkontur der Pressfläche realisiert und einfache Presswerkzeuge mit einfacher zylindrischer oder zumindest teilweise zylindrischer Presskontur können eingesetzt werden.

Bekannte Presswerkzeuge weisen des Weiteren eine Presskontur mit einer umlaufenden Vertiefung auf, die an eine einen Dichtring aufnehmende Sicke eines Fittings angepasst ist. An die Vertiefung schließen sich zu beiden Seiten zylindrische Abschnitte und an mindestens einem der beiden zylindrischen Abschnitte ein Mehrkantprofil an, vorzugsweise ein Sechskantprofil auf. Das erfindungsgemäße Fitting kann dann eine Pressfläche des Grundkörpers mit einer umlaufenden, vorzugsweise massiven Wulst aufweisen. Die Wulst wird dann mittels der umlaufenden Vertiefung des Presswerkzeugs verpresst, während die weiteren zylindrischen Abschnitte und Mehrkantabschnitte der Presskontur des Presswerkzeugs beim Verpressen vorzugsweise nicht mit der Pressfläche des Fittings in Berührung kommen. Somit wird eine bekannte Presskontur eines herkömmlichen Presswerkzeugs eingesetzt, dessen Abmaße und Dimensionen der Vertiefung exakt vorgegeben sind und für ein exaktes Verpressen des aufgeschraubten Fittings eingesetzt werden können.

Das oben aufgezeigte technische Problem wird auch durch ein Verfahren zum Anbinden eines Fittings an einem Gewindeanschluss einer Leitung, insbesondere einer Wasserleitung, oder an einer Armatur gelöst, bei dem eine Schraubverbindung zwischen einem Gewindeabschnitt des Fittings und dem Gewinde des Gewindeanschlusses hergestellt wird, wobei der Dichtkörper eine zylindrische Grundform aufweist und sich axial mindestens entlang einer Windung, vorzugsweise mindestens entlang von zwei Windungen des abzudichtenden Gewindes des Gewindeanschlusses erstreckt und der Dichtkörper zumindest teilweise mit einem Gewinde versehen ist, bei dem ein am Gewindeabschnitt angeordneter Dichtkörper zumindest teilweise im Bereich des Gewindes des Gewindeanschlusses positioniert wird und bei dem der Grundkörper an der dem Gewindeabschnitt radial gegenüberliegenden Seite des Grundkörpers an einer Pressfläche verpresst wird.

Somit kann der Grundkörper im aufgeschraubten Zustand verpresst und der Dichtkörper an das Gewinde des Gewindeanschlusses sowie an den Gewindeabschnitt angepresst werden, wie zuvor schon anhand des Fittings erläutert worden ist.

Durch das erfindungsgemäße Verfahren wird die Handhabung durch den Handwerker vereinfacht, denn das Fitting kann ohne Kraftaufwand auf den Gewindeanschluss aufgeschraubt werden, ohne dass es bereits zu einer festen Abdichtung kommt. Erst nach dem anschließenden Verpressen durch das Einbringen einer vorwiegend radialen Presskraft wird eine feste und dichte Verbindung erzeugt. Dabei wird keine zu große Torsionskraft durch ein festes Aufschrauben in die Verbindung eingebracht.

Bei einer ersten Ausgestaltung des erfindungsgemäßen Verfahrens ist das Gewinde des Gewindeabschnitts ein Innengewinde und der Gewindeabschnitt wird mit einer Presszange radial nach innen verpresst. Dazu können bereits bekannte handelsübliche Presswerkzeuge bzw. Presszangen eingesetzt werden. Die Außenkontur des Gewindeabschnitts, die die Pressfläche bildet, wird dazu an die Presskontur des Presswerkzeugs angepasst, um eine besondere Ausgestaltung des Presswerkzeugs zu vermeiden.

Bei einer zweiten Ausgestaltung des erfindungsgemäßen Verfahrens ist das Gewinde des Gewindeabschnitts ein Außengewinde und der Gewindeabschnitt wird mit einem Aufweitungswerkzeug radial nach außen verpresst. Dazu kann das Fitting mit eingesetztem Aufweitungswerkzeug bestehend aus einer Aufweitungshülse und einem Aufweitungsstempel aufgeschraubt werden. Anschließend wird die Aufweitungshülse durch Herausziehen des Aufweitungsstempels nach außen aufgeweitet, um dabei den Gewindeabschnitt nach außen aufzuweiten. Dadurch wird der Dichtkörper zuverlässig abdichtend mit dem Innengewinde des Gewindeanschlusses und dem Gewindeabschnitt des Fittings verpresst.

Im Folgenden wird die Erfindung anhand von Ausführungsbeispielen näher erläutert, wozu auf die beigefügte Zeichnung Bezug genommen wird. In der Zeichnung zeigen
- Fig. 1: ein erstes Ausführungsbeispiel eines erfindungsgemäßen Fittings mit einem Gewindeabschnitt mit Innengewinde in einer perspektivischen Darstellung,
- Fig. 2: das Fitting aus Fig.1 in einer geschnittenen perspektivischen Darstellung,
- Fig. 3: das Fitting aus Fig. 1 aufgeschraubt auf einen Gewindeanschluss im unverpressten Zustand im Querschnitt,
- Fig. 4: das Fitting aus Fig.1 aufgeschraubt auf einen Gewindeanschluss im verpressten Zustand im Querschnitt,
- Fig. 5: ein zweites Ausführungsbeispiel eines erfindungsgemäßen Fittings mit einem Gewindeabschnitt mit Innengewinde in einer perspektivischen Darstellung,
- Fig. 6: das Fitting aus Fig. 5 in einer geschnittenen perspektivischen Darstellung,
- Fig. 7: das Fitting aus Fig. 5 aufgeschraubt auf einen Gewindeanschluss im unverpressten Zustand im Querschnitt,
- Fig. 8: das Fitting aus Fig. 5 aufgeschraubt auf einen Gewindeanschluss im verpressten Zustand im Querschnitt,
- Fig. 9: ein drittes Ausführungsbeispiel eines erfindungsgemäßen Fittings mit einem Gewindeabschnitt mit Innengewinde in einer perspektivischen Darstellung,
- Fig. 10: das Fitting aus Fig. 9 in einer geschnittenen perspektivischen Darstellung,
- Fig. 11: das Fitting aus Fig. 9 aufgeschraubt auf einen Gewindeanschluss im unverpressten Zustand im Querschnitt,
- Fig. 12: das Fitting aus Fig. 9 aufgeschraubt auf einen Gewindeanschluss im verpressten Zustand im Querschnitt,
- Fig. 13: ein viertes Ausführungsbeispiel eines erfindungsgemäßen Fittings mit einem Gewindeabschnitt mit Außengewinde in einer perspektivischen Darstellung,
- Fig. 14: das Fitting aus Fig. 13 mit Aufweitungswerkzeug in einer perspektivischen Darstellung,
- Fig. 15: das Fitting aus Fig. 13 aufgeschraubt auf einen Gewindeanschluss im unverpressten Zustand im Querschnitt,
- Fig. 16: das Fitting aus Fig. 13 aufgeschraubt auf einen Gewindeanschluss im teilweise verpressten Zustand während des Herausziehens des Aufweitungswerkzeugs im Querschnitt,
- Fig. 17: das Fitting aus Fig. 13 aufgeschraubt auf einen Gewindeanschluss im verpressten Zustand,
- Fig. 18: ein fünftes Ausführungsbeispiel eines erfindungsgemäßen Fittings mit einem Gewindeabschnitt mit Innengewinde im Querschnitt mit einer gegenüber dem dritten Ausführungsbeispiel geänderten Außenkontur der Pressfläche des Grundkörpers,
- Fig. 19: das Fitting aus Fig. 18 mit eingesetztem Dichtkörper,
- Fig. 20: das Fitting aus Fig. 19 aufgeschraubt auf einen Gewindeanschluss im unverpressten Zustand im Querschnitt mit angesetztem Presswerkzeug,
- Fig. 21: das Fitting aus Fig. 19 aufgeschraubt auf einen Gewindeanschluss im verpressten Zustand im Querschnitt mit angesetztem Presswerkzeug,
- Fig. 22: das Fitting aus Fig. 19 aufgeschraubt auf einen Gewindeanschluss im verpressten Zustand im Querschnitt und
- Fig. 23: das Fitting aus den Fig. 19 bis 22 in einer direkten Anbindung an eine Armatur in Form eines Kugelventils.

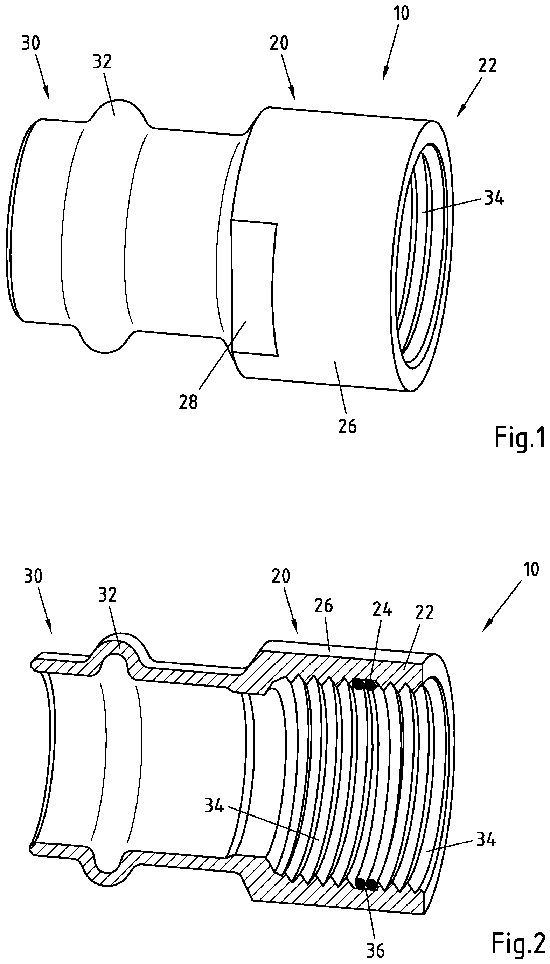

Die Fig. 1 bis 4 zeigen ein erstes Ausführungsbeispiel eines erfindungsgemäßen Fittings 10 für eine Anbindung an einem Gewindeanschluss 12 einer Leitung 14, die insbesondere eine Wasserleitung sein kann.

Wie Fig.1 und 2 zeigen, weist das Fitting 10 einen Grundkörper 20, einen Gewindeabschnitt 22 und einen am Gewindeabschnitt 22 angeordneten Dichtkörper 24 auf. Zudem weist der Grundkörper 20 an der dem Gewindeabschnitt 22 radial gegenüberliegenden Seite eine Pressfläche 26 auf. Die Pressfläche 26 ist zylindrisch ausgebildet. Der Grundkörper 20 weist darüber hinaus abgeflachte Abschnitte 28 für den Ansatz von Schraubschlüsseln beim Aufschrauben des Fittings 10 auf.

Das Fitting 10 weist am dem Gewindeabschnitt 20 gegenüberliegenden Endabschnitt 30 eine herkömmliche Wulst 32 für die Aufnahme eines ringförmigen Dichtmittels auf. Der Endabschnitt 30 kann also für eine herkömmliche Pressverbindung mit einem Anschlussrohr verwendet werden. Die genaue Ausgestaltung des Pressfittings am Endabschnitt 30 ist für die vorliegende Erfindung nicht wesentlich. Das Fitting 10 kann auch anstelle einer weiteren Pressverbindung direkt einstückig in ein Leitungsrohr mit einer vorgegebenen Länge oder in eine Armatur, Ventilanordnung oder Abzweigung in Form eines T-Stücks oder Kreuzungsstücks übergehen.

Fig. 1 und 2 zeigen, dass der Gewindeabschnitt 22 ein Gewinde 34 bestehend aus dem Material des Grundkörpers 20 aufweist. Das Gewinde 34 dient zum Aufschrauben auf den Gewindeanschluss 12. Des Weiteren weist der Gewindeabschnitt 22 eine umlaufende Nut 36 zur Aufnahme des Dichtkörpers 24 auf. Der Dichtkörper 24 ist schnurförmig ausgebildet und erstreckt sich umfangseitig entlang von zwei Windungen des abzudichtenden Gewindes 40 des Gewindeanschlusses 12.

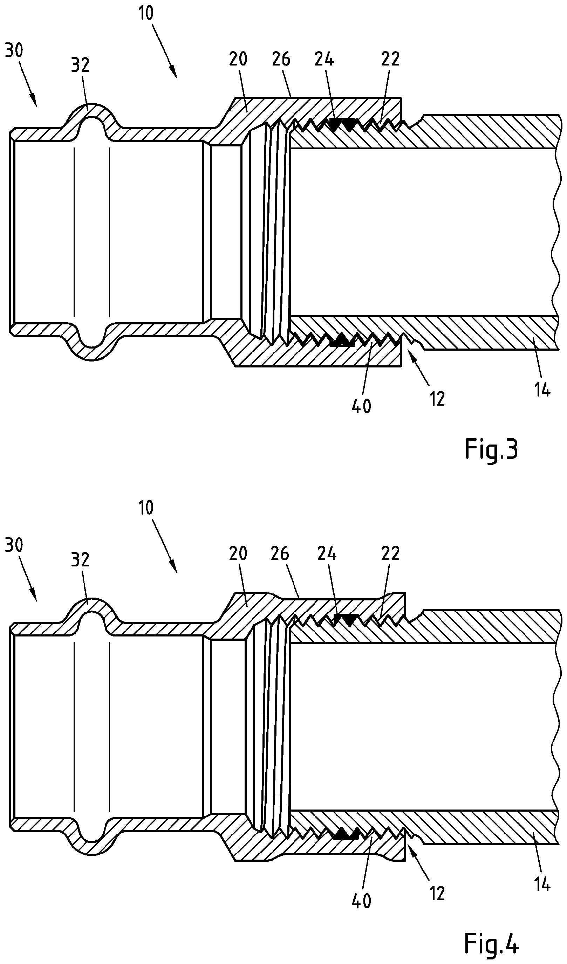

Fig. 3 zeigt den Fitting 10 nach dem Aufschrauben auf dem Gewindeanschluss 12 im unverpressten Zustand. Das Außengewinde 40 des Gewindeanschlusses 12 steht im teilweisen Eingriff sowohl mit dem Gewinde 34 als auch mit dem Dichtkörper 24. In diesem Zustand ist die Verbindung zwischen dem Fitting 10 und dem Gewindeanschluss 12 noch nicht sicher abgedichtet. Im dargestellten aufgeschraubten Zustand weisen die beiden Gewinde 34 und 40 noch einen geringen Abstand voneinander auf, was an einer größeren Strichstärke in Fig. 3 zu erkennen ist. Anschließend wird das Fitting an der Pressfläche 26 radial nach innen verpresst und der Dichtkörper 24 wird somit an das Gewinde 40 des Gewindeanschlusses 12 angepresst.

Der Zustand nach dem Verpressen wird in Fig. 4 dargestellt, wobei die geänderte Form des Gewindeabschnitts 22 zu erkennen ist. Die beiden Gewinde 34 und 40 liegen eng aneinander an. Somit wird erst durch das radial nach innen verlaufende Verpressen eine dauerhafte dichte Verbindung zwischen dem Fitting 10 und dem Gewindeanschluss 12 fertig gestellt.

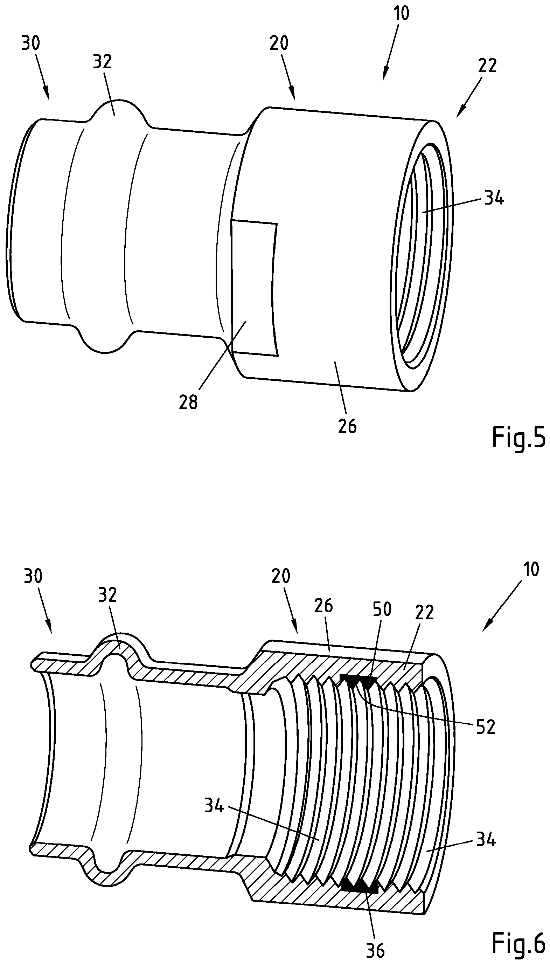

In den Fig. 5 bis 8 wird ein zweites Ausführungsbeispiel der vorliegenden Erfindung dargestellt. Dabei kennzeichnen gleiche Bezugszeichen gleiche Elemente, wie sie schon anhand der Fig. 1 bis 4 beschrieben worden sind.

Beim vorliegenden Ausführungsbeispiel weist der Dichtkörper 50 eine zylindrische Grundform auf und erstreckt sich axial entlang von zwei Windungen des abzudichtenden Gewindes 40 des Gewindeanschlusses 12. Dabei ist der Dichtkörper 50 in der Nut 36 angeordnet, die bereits anhand der Fig.1 und 2 beschrieben worden ist.

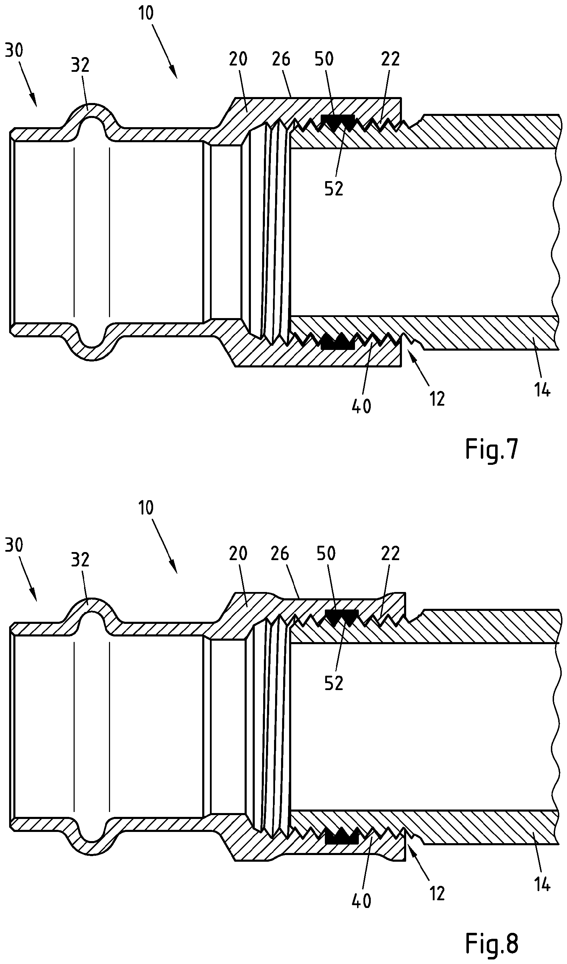

Wie in den Fig. 5 und 6 dargestellt ist, ist der Dichtkörper 50 mit einem Gewinde 52 versehen, das zusätzlich zu dem Gewinde 34 des Gewindeabschnittes 22 zum Aufschrauben auf den Gewindeanschluss 12 aufgeschraubt wird. Somit kommt der Dichtkörper 50 bereits während des Aufschraubens in direkten Kontakt mit den Windungen des Gewindes 40, wie in Fig. 7 gezeigt ist. Fig. 8 zeigt dann wieder den verpressten Zustand des Fittings.

Wie sich aus den Fig. 2 und 6 ergibt, weisen die Dichtkörper 24 und 50 einen größeren Innendurchmesser als das Gewinde 34 des Gewindeabschnittes 22 auf. Somit wird der jeweilige Dichtkörper 24, 50 während des Aufschraubens nicht stark belastet und die Last der aufzubringenden Schraubkraft wird vom Gewinde 34 getragen. Dadurch wird unter anderem vermieden, dass sich der Dichtkörper 24, 50 beim Aufschrauben verkantet oder in anderer Weise aus seiner vorgegebenen Position heraus bewegt. Gleichwohl kommt der Dichtkörper 24, 50 in Berührung, Anlage oder teilweisem Eingriff mit dem Gewinde 40 des Gewindeanschlusses 12.

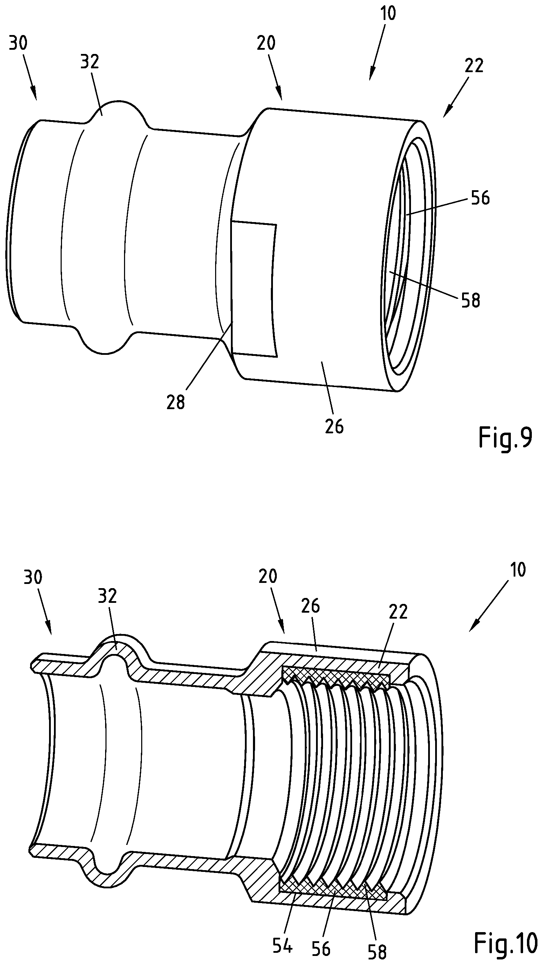

In den Fig. 9 bis 12 wird ein drittes Ausführungsbeispiel der vorliegenden Erfindung dargestellt. Dabei kennzeichnen gleiche Bezugszeichen gleiche Elemente, wie sie schon anhand der Fig. 1 bis 4 beschrieben worden sind.

Wie Fig. 9 und 10 zeigen, weist der Gewindeabschnitt 22 eine Vertiefung 54 zur Aufnahme des Dichtkörpers 56 auf. Daher weist der Gewindeabschnitt 22 des Grundkörpers 20 nicht das Gewinde zum Aufschrauben auf den Gewindeanschluss 12 auf, sondern der Dichtkörper 56 selbst weist ein Gewinde 58 auf. Allein dieses Gewinde 58 wird für das Aufschrauben auf den Gewindeanschluss 12 verwendet.

Ein besonderer Vorteil dieser Ausgestaltung ohne Gewinde im Gewindeabschnitt 22 des Grundkörpers 20 besteht darin, dass der Grundkörper 20 durch Metallumformen hergestellt werden kann, wodurch sich im Gegensatz zu einem spanabhebenden Verfahren zur Herstellung eines metallischen Gewindes eine deutliche Kosteneinsparung erzielen lässt.

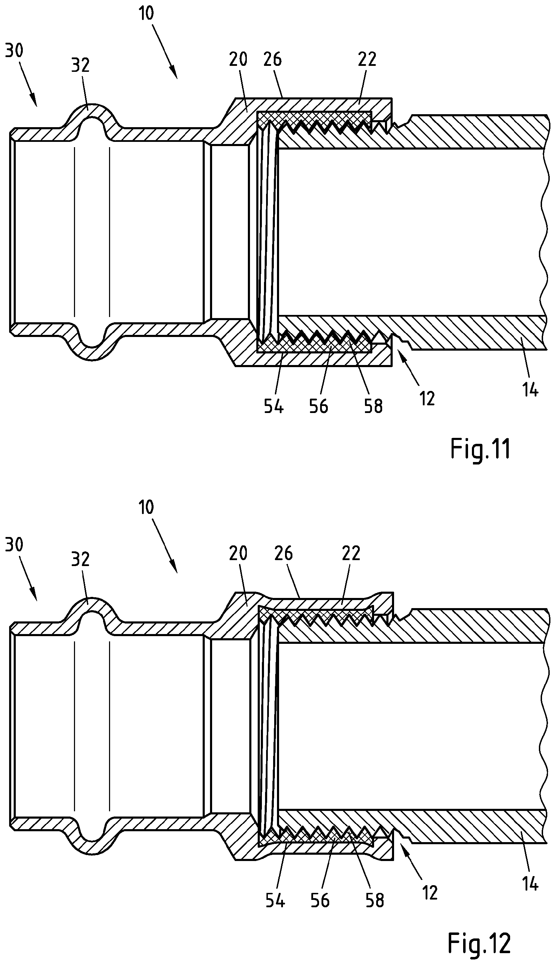

Fig.11 zeigt wieder den aufgeschraubten aber unverpressten Zustand, während Fig. 12 den Zustand nach dem Verpressen zeigt.

Die Ausführungsbeispiele nach den Fig. 1 bis 12 sind so ausgebildet, dass das Gewinde 34, 52 bzw. 58 des Gewindeabschnitts 2 ein Innengewinde ist und dass daher der Gewindeabschnitt 22 mit einer Presszange radial nach innen verpresst werden kann.

In dieser Weise wird der Übergang vom unverpressten in den verpressten Zustand von den Fig. 3 nach 4, 7 nach 8 und 11 nach 12 erreicht.

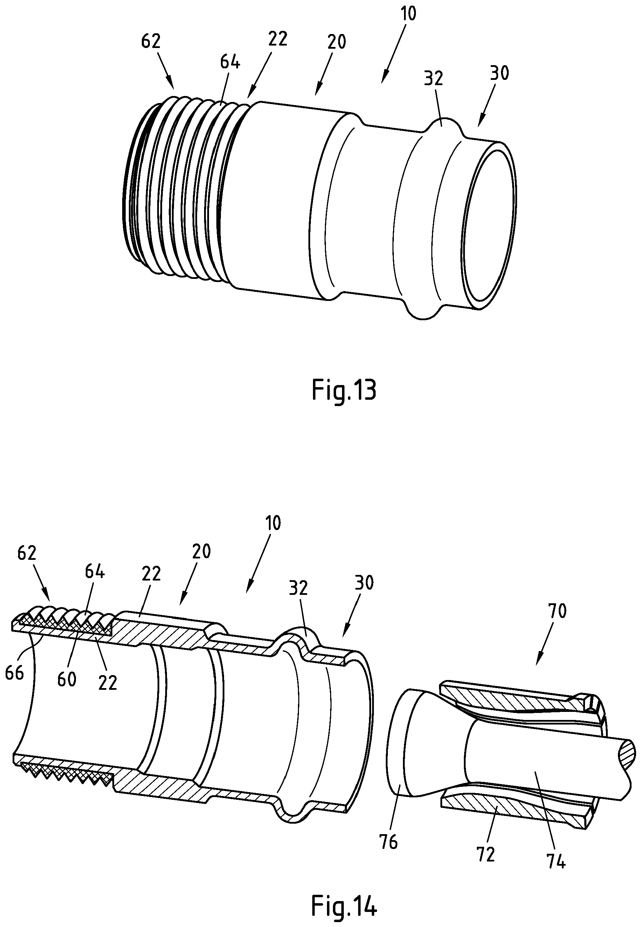

Das Ausführungsbeispiel nach den Fig. 13 bis 17 weist einen Fitting 10 für einen Gewindeanschluss 12 auf, wobei der Gewindeanschluss 12 mit einem Innengewinde 42 versehen ist. Dabei kennzeichnen wieder gleiche Bezugszeichen gleiche Elemente, wie sie schon anhand der Fig.1 bis 4 beschrieben worden sind.

Der Grundkörper 20 des Fittings 10 weist einen Gewindeabschnitt 22 mit einer Außenkontur mit einer umlaufenden Vertiefung 60 und einer im Wesentlichen zylindrischen Innenkontur auf. In der Vertiefung ist der Dichtkörper 62 mit im Wesentlichen zylindrischer Form positioniert, der an der Außenseite mit einem Gewinde 64 versehen ist. Das Fitting 10 wird in das Außengewinde 42 des Gewindeanschlusses eingeschraubt, so dass der Dichtkörper 62 im Bereich des Gewindes 42 positioniert wird. Der Dichtkörper 62 ist also in ähnlicher Weise wie der Dichtkörper 56 nach den Fig. 9 bis 12 ausgebildet. Es ist aber ebenso möglich, den Dichtköper und auch den Gewindeabschnitt in ähnlicher Weise wie nach den Fig. 1 bis 8 auszugestalten.

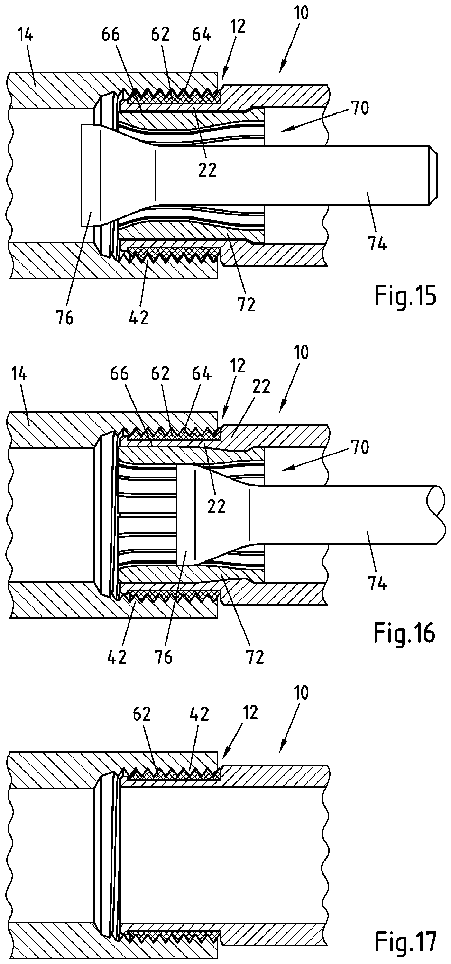

Anschließend erfolgt das Verpressen des Gewindeabschnitts 22 an einer Pressfläche 66 durch eine Aufweitung im Wesentlichen radial nach außen, so dass eine sichere Abdichtung zwischen dem Fitting 10 und dem Gewindeanschluss 12 erreicht wird. Dieser Vorgang wird weiter unten anhand der Fig. 15 bis 17 näher erläutert.

Die zuvor erläuterten Ausführungsbeispiele des erfindungsgemäßen Fittings können so ausgestaltet werden, dass die Verbindung zwischen dem Gewinde 34, 52, 58; 64 des Gewindeabschnitts 22 und dem Gewinde 40; 42 des Gewindeabschnitts 12 im aufgeschraubten und unverpressten Zustand undicht ist. Dazu kann eine axiale Nut bzw. axiale Ausweitung im Gewinde 34, 52,58; 64 vorgesehen sein. Diese ist nicht explizit in den Figuren dargestellt. Die axiale Nut bzw. axiale Ausweitung wird erst durch das Verpressen abdichtend verformt, während vor dem Verpressen ein absichtliches Leck vorhanden ist, das bei einer Funktionsprüfung durch Austritt des Wassers aus der Verbindung detektiert werden kann.

Das erfindungsgemäße Verfahren zum Anbinden eines Fittings 10 an einem Gewindeanschluss 12 einer Leitung 14 weist, wie anhand der Figuren 1 bis 16 beschrieben die folgenden Schritte auf:
- Auf- bzw. Einschrauben des Fittings 10 mit einem Gewindeabschnitt 22 auf bzw. in das Gewinde 40 des Gewindeanschlusses 12 zum Herstellen einer Schraubverbindung,
- Positionieren eines am Gewindeabschnitt 22 angeordneter Dichtkörper 24, 50, 56; 62 zumindest teilweise im Bereich des Gewindes 40; 42 des Gewindeanschlusses 12 und
- Verpressen des Grundkörpers 20 an der dem Gewindeabschnitt 22 radial gegenüberliegenden Seite an einer Pressfläche 26,66 insbesondere in radialer Richtung.

Wenn das Gewinde 40 des Gewindeabschnitts 22 ein Innengewinde ist, wird der Gewindeabschnitt 22 mit einer Presszange radial nach innen verpresst. Dieses ist bereits oben anhand der Fig. 1 bis 12 erläutert worden.

Ist dagegen das Gewinde 42 des Gewindeabschnitts 22 ein Außengewinde, wird der Gewindeabschnitt 22 mit einem Aufweitungswerkzeug 70 radial nach außen verpresst, wie in den Fig. 13 bis 17 dargestellt wird.

Wie Fig. 15 zeigt, wird vor dem Einschrauben des Fittings 10 in das Gewinde 42 das Aufweitungswerkzeug 70 bestehend aus einer Aufweitungshülse 72 und einem Stempel 74 mit einem aufgeweiteten Ende 76 durch das Fitting 10 hindurch geschoben. Danach wird das Fitting 10 zusammen mit dem Aufweitungswerkzeug 70 in das Gewinde 42 eingeschraubt, bis der Dichtkörper 62 im Bereich des Gewindes 42 angeordnet ist. Gemäß Fig. 16 wird anschließend der Stempel 74 aus dem Fitting 10 und aus der darin lösbar befestigten Aufweitungshülse 72 herausgezogen. Dabei durchläuft das aufgeweitete Ende 76 den Gewindeabschnitt 22 entlang der Pressfläche 66 und drückt den Gewindeabschnitt 22 radial nach außen. Dadurch wird der Dichtkörper 62 fest mit dem Gewinde 42 verpresst und eine sicher und dichte Verbindung zwischen dem Fitting 10 und dem Gewindeanschluss 12 wird hergestellt, wie in Fig. 17 dargestellt ist.

Wie sich aus der Beschreibung der Fig.1 bis 17 ergibt, weist die Pressfläche 26; 66 des Grundkörpers 20 eine im Wesentlichen zylindrische Kontur auf. Somit können radial nach innen wirkende Presswerkzeuge, beispielsweise Presszangen, mit einer Presskontur eingesetzt werden, die mindestens einen Abschnitt aufweist, der mit der zylindrischen Kontur der Pressfläche 26 in Eingriff gebracht werden kann. Dabei kann der zylindrische Abschnitt der Presskontur ein Teil einer komplexeren Presskontur sein. Es kommt dabei nur darauf an, dass die Pressfläche 26 an das zu benutzende Werkzeug so angepasst ist, dass diese unverändert ein erfolgreiches Verpresssen des Fittings 10 ermöglicht.

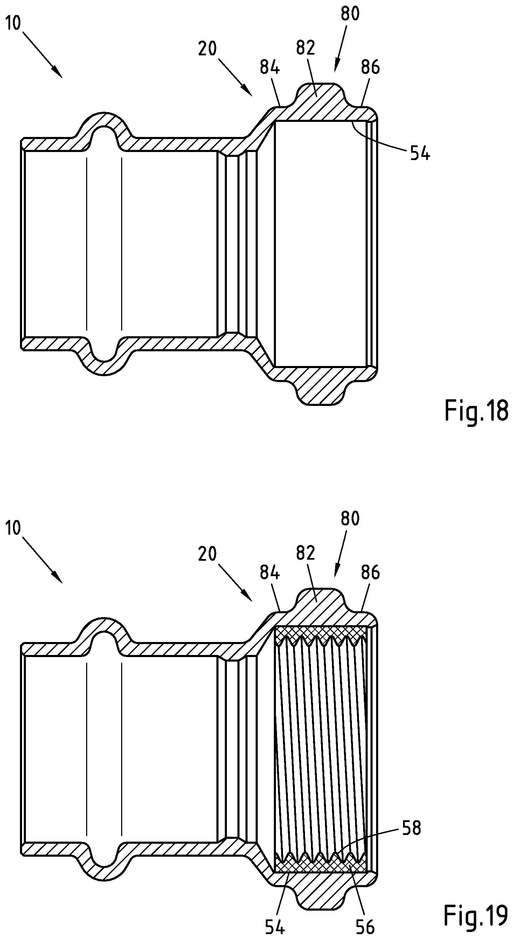

Die Fig. 18 bis 22 zeigen ein fünftes Ausführungsbeispiel eines erfindungsgemäßen Fittings 10, der in Bezug auf die Anordnung der Vertiefung 54 und des Dichtkörpers 56 mit Innengewinde 58 gleich ist wie das dritte Ausführungsbeispiel nach den Fig. 9 bis 12.

Das fünfte Ausführungsbeispiel weist nun eine von der zylindrischen Pressfläche des dritten Ausführungsbeispiels abweichende Pressfläche 80 auf, die nachfolgend erläutert wird und ebenfalls bei allen Ausführungsbeispielen nach den Fig. 1 bis 12 anstelle der zylindrischen Pressfläche 26 angewendet werden kann.

Beim fünften Ausführungsbeispiel weist die Pressfläche 80 des Grundkörpers 20 eine umlaufende, massive Wulst 82 auf. Die Wulst 82 ist insbesondere in den Fig. 18 und 19 zu erkennen, wobei in Fig. 18 der Dichtkörper 56 weggelassen worden ist, während Fig. 19 den in der Vertiefung 54 eingesetzten Dichtkörper 56 mit Innengewinde 58 zeigt. Zu beiden Seiten der Wulst 82 schließen sich im Wesentlichen zylindrische Flächen 84 und 86 an.

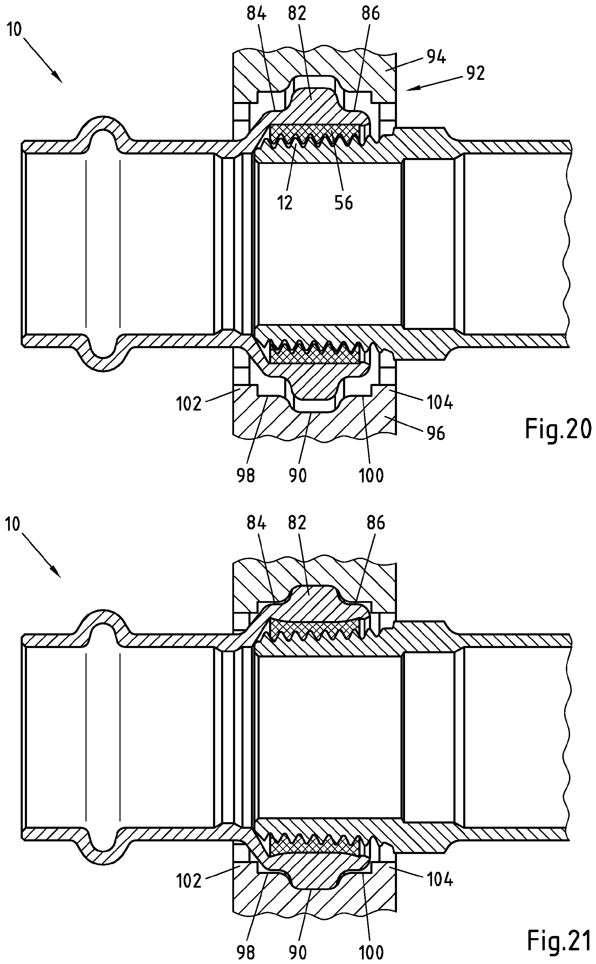

In Fig. 20 ist der Fitting 10 auf einen auf den Gewindeanschluss 12 aufgeschraubt, ohne bereits vollständig die Verbindung zwischen Fitting 10 und Gewinde 12 abzudichten. Zudem ist die Wulst 82 an eine umlaufende Vertiefung 90 einer Presskontur eines Presswerkzeugs 92 angepasst. Dabei handelt es sich um ein herkömmliches Presswerkzeug, bei dem zwei gelenkig gelagerte Pressbacken 94 und 96 den Fitting 10 umschließen, wobei die Pressbacken 94 und 96 in Fig. 20 nur teilweise dargestellt sind.

Die Pressbacken 94 und 96 weisen eine Presskontur mit der bereits erwähnten Vertiefung 90, zwei sich daran anschließenden zylindrischen Flächen 98 und 100 und weiterhin sich anschließende Mehrkantelemente 102 und 104. Die Mehrkantelemente 102 und 104 prägen beim Verpressen eines herkömmlichen Pressfittings einen Mehrkant ein, um eine Verdrehsicherung zwischen dem Fitting und dem damit fest verbundenen Rohr zu gewährleisten. Die Vertiefung 90 dient beim Verpressen dazu, eine entsprechend ausgestaltete Sicke mit innen liegendem Dichtmittel wie beispielsweise einem O-Ring so zu verformen, dass eine dichte Verbindung zwischen Fitting und Rohr entsteht. Da es beim Verpressen auf eine möglichst exakte Verformung der Sicke ankommt, sind die Dimensionen der umlaufenden Vertiefung 90 exakt vorgegeben.

In Fig. 20 ist der Zustand vor dem Verpressen dargestellt, in dem der Wulst 82 noch beabstandet von der Vertiefung 90 angeordnet ist. Auch andere Abschnitte der Pressfläche 80 liegen nicht an der Presskontur der Pressbacken 94 und 96 an.

Fig. 21 zeigt nun den Zustand während des Verpressens bzw. nach dem Verpressen, in dem die Pressbacken 94 und 96 noch am Fitting 10 anliegen. In diesem Zustand liegt die Vertiefung 90 am Wulst 82 an und hat den Wulst 82 umlaufend radial nach innen verpresst und somit dauerhaft verformt. Dagegen liegen die zylindrischen Abschnitte 84 und 86 des Fittings 10 nicht an den Pressbackenabschnitten 98 und 100 an, so dass in diesen Bereichen keine Krafteinwirkung und Verformung des Fittings 10 hervorgerufen worden ist. Ebenso liegen die Mehrkantelemente 102 und 104 nicht an der Presskontur 80 an. Somit wurde nur der Bereich der Wulst 82 nach innen verformt und der radial innen liegende Abschnitt des Dichtkörpers 56 wurde gleichmäßig verformt, so dass eine feste und dauerhafte Abdichtung zwischen dem Fitting 10 und dem Gewinde 12 erreicht worden ist.

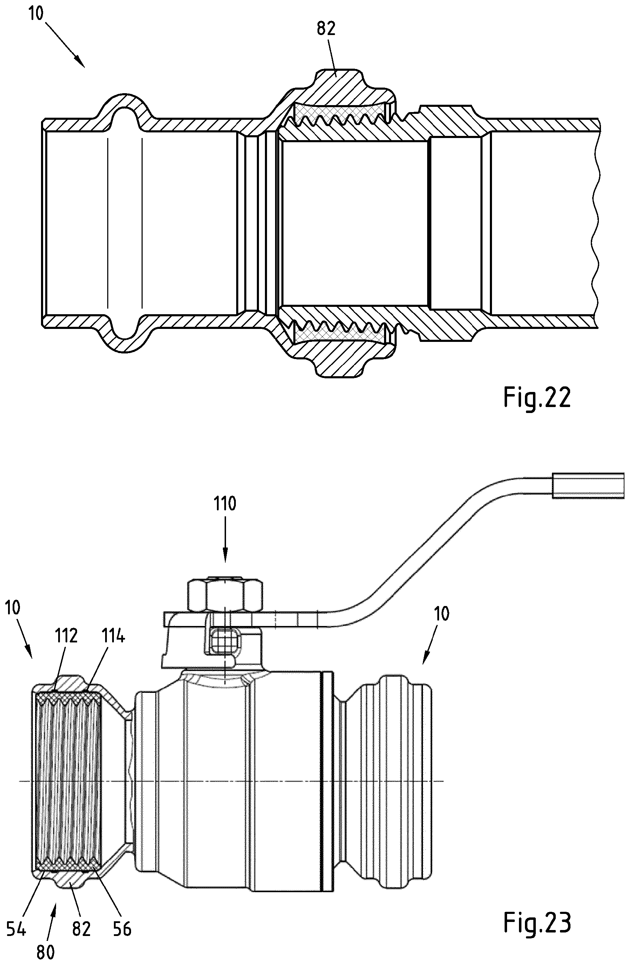

Fig. 22 zeigt schließlich den fertig verpressten Zustand des Fittings 10 mit Wulst 82 ohne Presswerkzeug.

Die Ausgestaltung des Fittings 10 mit der Wulst 82 hat den Vorteil, dass nur die Vertiefung 90 der Pressbacken 94 und 96 für das Verformen des Fittings 10 verwendet werden. Die Abmessungen der Vertiefung 90 sind für die herkömmlichen Pressaufgaben exakt vorgegeben, während die Abmessungen der anderen Abschnitte der Presskontur nicht so genau vorgegeben und eingestellt sind. Somit wird ein exaktes Pressergebnis für den Fitting 10 erreicht, ohne dass das Presswerkzeug in besonderer Weise für das Verpressen des erfindungsgemäßen Fittings 10 angepasst werden muss.

Fig. 23 zeigt das zuvor erläuterte Fitting 10 gemäß den Fig. 18 bis 22 in einer direkten Anbindung an eine Armatur in Form eines Kugelventils 110, dessen Funktionsweise nicht im Detail erläutert werden braucht. Das Fitting 10 weist ebenfalls die zuvor beschriebene Wulst 82 der Pressfläche 80 auf, so dass eine Leitung oder eine weitere Armatur mit einem Außengewinde in der zuvor beschriebenen Weise mit dem Fitting 10 bzw. dem Kugelventil 110 verbunden werden kann.

Auch in diesem Ausführungsbeispiel kann das Fitting 10 durch eine Metallumformung hergestellt werden, so die gesamte Armatur aus Kugelventil und Leitungsanschlüssen bzw. Fittingen preiswerter in der Herstellung ist.

Wie Fig. 23 zeigt, weist das Kugelventil 100 zu beiden Seiten einen erfindungsgemäßen Fitting 10 auf. Daneben ist es auch möglich, dass das Kugelventil 110 nur auf einer Seite einen erfindungsgemäßen Fitting 10 und an der anderen Seite einen normalen Pressfitting aufweist.

Zusätzlich zu der Ausgestaltung nach den Fig. 18 bis 22 weist die Innenkontur der Vertiefung 54 zwei Nuten 112 und 114 auf, die während des Einschraubens des Innengewindes ein Verkanten des Materials des Dichtkörpers 56 verstärkt, um eine bessere Verdrehsicherung des Dichtkörpers 56 relativ zur Vertiefung 54 des Fittings zu ermöglichen.

## Patentansprüche

1. Verwendung eines Fittings für eine Anbindung an einem Gewindeanschluss einer Leitung, insbesondere einer Wasserleitung, oder an einer Armatur zu einer Verpressung mit einem Presswerkzeug, der Fitting umfassend:
- einen Grundkörper (20),
- einen Gewindeabschnitt (22) und
- einen am Gewindeabschnitt (22) angeordneten Dichtkörper (24, 50, 56; 62),
- wobei der Grundkörper (20) an der dem Gewindeabschnitt (22) gegenüberliegenden Seite eine Pressfläche (26,66, 80) aufweist,
- wobei der Dichtkörper (50) eine zylindrische Grundform aufweist und sich axial mindestens entlang einer Windung, vorzugsweise mindestens entlang von zwei Windungen des abzudichtenden Gewindes des Gewindeanschlusses erstreckt und
- wobei der Dichtkörper (50) zumindest teilweise mit einem Gewinde (52) versehen ist,
**dadurch gekennzeichnet,**
- **dass** der Grundkörper an der dem Gewindeabschnitt radial gegenüberliegenden Seite an der Pressfläche verpresst wird.

2. Verwendung nach Anspruch 1,
**dadurch gekennzeichnet,**
**dass** der Gewindeabschnitt (22) ein Gewinde (34) zumindest teilweise bestehend aus dem Material des Grundkörpers (20) aufweist.

3. Verwendung nach Anspruch 2,
**dadurch gekennzeichnet,**
**dass** der Gewindeabschnitt (22) eine umlaufende Nut (36) zur Aufnahme des Dichtkörpers (24, 50, 56) aufweist.

4. Verwendung nach Anspruch 3,
**dadurch gekennzeichnet,**
**dass** der Gewindeabschnitt (22) eine Vertiefung (54) zur Aufnahme des Dichtkörpers (56) aufweist und dass der Dichtkörper (56) ein Gewinde (58) bildet.

5. Verwendung nach einem der Ansprüche 1 bis 4,
**dadurch gekennzeichnet**,
die Verbindung zwischen dem Gewinde (34, 52, 58; 64) des Gewindeabschnitts (22) und dem Gewinde (40; 42) des Gewindeabschnitts (12) im aufgeschraubten und unverpressten Zustand undicht ist.

6. Verwendung nach einem der Ansprüche 1 bis 5,
**dadurch gekennzeichnet,**
**dass** das Gewinde (34, 52, 58) ein Innengewinde ist.

7. Verwendung nach einem der Ansprüche 1 bis 5,
**dadurch gekennzeichnet,**
**dass** das Gewinde (64) ein Außengewinde ist.

8. Verwendung nach einem der Ansprüche 1 bis 6,
**dadurch gekennzeichnet,**
**dass** die Pressfläche (26, 66) des Grundkörpers (20) eine im Wesentlichen zylindrische Kontur aufweist.

9. Verwendung nach einem der Ansprüche 1 bis 6,
**dadurch gekennzeichnet,**
**dass** die Pressfläche (80) des Grundkörpers (20) eine umlaufende, vorzugsweise massive Wulst (82) aufweist.

10. Verwendung nach Anspruch 9,
**dadurch gekennzeichnet,**
**dass** die Wulst (82) an eine umlaufende Vertiefung einer Presskontur eines Presswerkzeugs angepasst ist.

11. Verfahren zum Anbinden eines Fittings an einem Gewindeanschluss einer Leitung, insbesondere einer Wasserleitung, oder an einer Armatur,
- bei dem eine Schraubverbindung zwischen einem Gewindeabschnitt des Fittings und dem Gewinde des Gewindeanschlusses hergestellt wird, wobei der Dichtkörper eine zylindrische Grundform aufweist und sich axial mindestens entlang einer Windung, vorzugsweise mindestens entlang von zwei Windungen des abzudichtenden Gewindes des Gewindeanschlusses erstreckt und der Dichtkörper zumindest teilweise mit einem Gewinde versehen ist,
- bei dem ein am Gewindeabschnitt angeordneter Dichtkörper zumindest teilweise im Bereich des Gewindes des Gewindeanschlusses positioniert wird und
- bei dem der Grundkörper an der dem Gewindeabschnitt radial gegenüberliegenden Seite an einer Pressfläche verpresst wird.

12. Verfahren nach Anspruch 11,
- bei dem das Gewinde des Gewindeabschnitts ein Innengewinde ist und
- bei dem der Gewindeabschnitt mit einer Presszange radial nach innen verpresst wird.

13. Verfahren nach Anspruch 11,
- bei dem das Gewinde des Gewindeabschnitts ein Außengewinde ist und
- bei dem der Gewindeabschnitt mit einem Aufweitungswerkzeug radial nach außen verpresst wird.

## Claims

1. Use of a fitting for attaching to a threaded connection of a pipe, in particular a water pipe, or to an armature, for pressing with a pressing tool, wherein the fitting comprises:
- a base body (20),
- a threaded portion (22) and
- a sealing body (24, 50, 56; 62) disposed on the threaded portion (22),
- wherein the base body (20) has a pressing surface (26, 66, 80) on the side situated opposite to the threaded portion (22),
- wherein the sealing body (50) has a cylindrical basic form and extends at least along one turn, preferably along two turns of the thread to be sealed of the threaded connection and
- wherein the sealing body (50) is provided at least partially with a thread (52),
**characterised in that**
- the base body is pressed on the side of the base body radially opposite to the threaded portion on a pressing surface.

2. Use according to claim 1, **characterised in that** the threaded portion (22) has a thread (34) comprising at least partially the same material as the base body (20).

3. Use according to claim 2, **characterised in that** the threaded portion (22) has a circumferential groove (36) for accommodating the sealing body (24, 50, 56).

4. Use according to claim 3, **characterised in that** the threaded portion (22) has a recess (54) for accommodating the sealing body (56) and **in that** the sealing body (56) forms a thread (58).

5. Use according to one of claims 1 to 4, **characterised in that** the connection between the thread (34, 52, 58; 64) of the threaded portion (22) and the thread (40; 42) of the threaded portion (12) is untight in the mounted and unpressed state.

6. Use according to one of claims 1 to 5, **characterised in that** the thread (34, 52, 58) is an internal thread.

7. Use according to one of claims 1 to 5, **characterised in that** the thread (64) is an external thread.

8. Use according to one of claims 1 to 6, **characterised in that** the pressing surface (26, 66) of the base body (20) has a substantially cylindrical profile.

9. Use according to one of claims 1 to 6, **characterised in that** the pressing surface (80) of the base body (20) has a circumferential, preferably solid bead (82).

10. Use according to claim 9, **characterised in that** the bead (82) is adapted to a circumferential recess of a press profile of a pressing tool.

11. Method for attaching a fitting to a threaded connection of a pipe, in particular a water pipe, or an armature,
- in which a threaded connection is created between a threaded portion of the fitting and the thread of the threaded connection, wherein the sealing body has a cylindrical basic form and extends at least along one turn, preferably along two turns of the thread to be sealed of the threaded connection and the sealing body is provided at least partially with a thread,
- in which a sealing body disposed on the threaded portion is positioned at least partially in the area of the thread of the threaded connection and
- in which the base body is pressed on the side of the base body radially opposite to the threaded portion on a pressing surface.

12. Method according to claim 11,
- in which the thread of the threaded portion is an internal thread and
- in which the threaded portion is pressed radially inwards with a crimping tool.

13. Method according to claim 11,
- in which the thread of the threaded portion is an external thread and
- in which the threaded portion is pressed radially outwards with an expansion tool.

## Revendications

1. Utilisation d'une pièce pour le raccordement sur un raccord fileté d'une conduite, en particulier une conduite d'eau ou sur une armature pour la compression avec un outil de pressage, la pièce comprenant :
un corps principal (20),
un segment fileté (22), et
un élément d'étanchéité (24, 50, 56 ; 62) agencé sur le segment fileté (22),
où le corps principal (20) présente sur le côté opposé au segment fileté (22), une surface de pression (26, 66, 80),
où l'élément d'étanchéité (50) présente une forme cylindrique et s'étend de manière axiale au moins le long d'une spire, de préférence au moins le long de deux spires du filetage rendant étanche du raccord fileté, et
où l'élément d'étanchéité (50) est muni au moins partiellement d'un filetage (52),
**caractérisée en ce que** le corps principal est pressé de manière radiale sur le raccord fileté, du côté opposé à la surface de pression.

2. Utilisation selon la revendication 1, **caractérisée en ce que** le segment fileté (22) présente un filet (34) consistant au moins partiellement en le matériau du corps principal (20).

3. Utilisation selon la revendication 2, **caractérisée en ce que** le segment fileté (22) présente une rainure circulaire (36) pour la réception de l'élément d'étanchéité (24, 50, 56).

4. Utilisation selon la revendication 3, **caractérisée en ce que** le segment fileté (22) forme un creux (54) pour la réception de l'élément d'étanchéité (56) et **en ce que** l'élément d'étanchéité (56) forme un filet (58).

5. Utilisation selon l'une des revendications 1 à 4, **caractérisée en ce que** la liaison entre le filet (34, 52, 58 ; 64) du segment fileté (22) et le filet (40 ; 42) du segment fileté (12) à l'état dévissé et non pressé est non étanche.

6. Utilisation selon l'une des revendications 1 à 5, **caractérisée en ce que** le filet (34, 52, 58) est un filet intérieur.

7. Utilisation selon l'une des revendications 1 à 5, **caractérisée en ce que** le filet (64) est un filet extérieur.

8. Utilisation selon l'une des revendications 1 à 6, **caractérisée en ce que** la surface de pression (26, 66) du corps principal (20) présente un contour essentiellement cylindrique.

9. Utilisation selon l'une des revendications 1 à 6, **caractérisée en ce que** la surface de pression (80) du corps principal (20) présente un bourrelet (82) circulaire, de préférence massif.

10. Utilisation selon la revendication 9, **caractérisée en ce que** le bourrelet (82) est appliqué sur un creux circulaire d'un contour de pression d'un outil de pression.

11. Procédé pour le raccordement d'une pièce sur un raccord fileté d'une conduite, en particulier une conduite d'eau, ou sur une armature, dans lequel une liaison vissée entre un segment fileté de la pièce et le filet du raccord fileté est effectuée, où l'élément d'étanchéité présente une forme cylindrique et s'étend de manière axiale, au moins le long d'une spire, de préférence au moins deux spires du filet rendant étanche du raccord fileté et l'élément d'étanchéité est munis au moins partiellement d'un filet, dans lequel l'élément d'étanchéité agent sur le segment fileté est positionné au moins partiellement au niveau du filet du raccord fileté et dans lequel le corps principal est pressé sur le côté opposé au segment fileté sur une surface de pression.

12. Procédé selon la revendication 11, dans lequel le filet du segment fileté est un filet intérieur et dans lequel le segment fileté est pressé vers l'intérieur avec une pince à sertir.

13. Procédé selon la revendication 11, dans lequel le filet du segment fileté est un filet extérieur et dans lequel le segment fileté est pressé vers l'extérieur avec un outil d'ouverture.
